# EUROPEAN PATENT SPECIFICATION

(11) **EP 3 042 566 B1**
(45) Date of publication and mention of the grant of the patent: **01.05.2019**
(21) Application number: 16150770.2
(22) Date of filing: 11.01.2016
(51) Int. Cl.: A23C 11/10

(54) **VEGETABLE YOGHURT-LIKE PRODUCTS AND METHODS FOR PRODUCING THESE**
PFLANZLICHE JOGHURTÄHNLICHE PRODUKTE UND VERFAHREN ZUR HERSTELLUNG DAVON
PRODUITS SIMILAIRES À UN YAOURT VÉGÉTAL ET PROCÉDÉS DE PRODUCTION ASSOCIÉS

(30) Priority: 10.01.2015 BE 201505009
(43) Date of publication of application: 13.07.2016
(73) Proprietor: Alpro Comm. VA, 8560 Wevelgem (BE)
(72) Inventor: Neirynck, Nico, 8560 Wevelgem (BE)
(74) Representative: Vanhalst, Koen

(56) References cited:
- EP-A1- 2 695 522
- EP-A2- 0 521 331
- JP-A- 2014 233 261
- US-A- 5 017 387
- US-A1- 2012 040 056
- ESCUETA E E ET AL: "EFFECT OF COCONUT CREAM ADDITION TO SOY MILK ON THE COMPOSITION TEXTURE AND SENSORY PROPERTIES OF TOFU", JOURNAL OF FOOD SCIENCE, vol. 50, no. 4, 1985, pages 887-890, XP002740418, ISSN: 0022-1147

## Description

### TECHNICAL FIELD

The present invention is situated in the field of food technology. In particular, the invention is directed to vegetable fermented products, more particularly yoghurt-like products on the basis of vegetable products such as soy and coconut, and methods for producing these.

### BACKGROUND

Owing to problems of lactose intolerance and allergies to milk proteins there is a growing trend towards the use of non-dairy fermentation substrates having a vegetable origin. Furthermore, vegetable fermented products that do not contain any animal product are suitable for vegetarians and vegans. In addition, consumers associate vegetable products with healthy and natural foods. Nowadays, fermented soy-based yoghurt-like products with an excellent texture and taste are readily available, as can be read in EP2695522.

Coconut is a very versatile fruit. It is a complete food rich in calories, vitamins, and minerals. The coconut meat is very high in saturated fats and has many bioactive compounds that are essential for better health. One important saturated fatty acid is lauric acid which increases high-density lipoprotein (HDL) cholesterol levels in the blood. The kernel or dried coconut meat is an excellent source of minerals such as copper, calcium, iron, manganese, magnesium, and zinc. It is also a very good source of B-complex vitamins such as folates, riboflavin, niacin, thiamin, and pyridoxine. These vitamins are essential in the sense that body requires them from external sources to replenish. Coconut meat also contains a high amount of potassium. Moreover, coconuts have excellent sensorial qualities.

To prepare fermented products, such as yoghurt-like products which can be sold in the plain category of the yoghurt section, on the basis of coconuts, one generally considers fermenting the coconut milk as such with e.g. lactic acid bacteria. However, a large amount of coconut material is required in order to obtain a natural fermented product which has some body or consistency, in order to resemble the structure or body of a yoghurt-like product. Such product will typically have a high saturated fat content (which is a drawback), and such product has a very hard structure when stored in a fridge (at low temperature) because nearly all fats are in crystalline form. In order to reduce ingredient costs, less coconut material can be used in combination with stabilizers, thickeners and other carbohydrates, but such product cannot be perceived anymore as natural and also typically will not have a yoghurt-like structure. In general, producing natural coconut-based yoghurt-like products with a typical yoghurt-like structure or viscosity and at an acceptable cost, is up to now an unresolved challenge. Japanese patent application JP2014233261 for example has reported on the use of coconut cream in fermented products, but in fact aimed at reducing or eliminating the taste thereof by adding soy milk and by fermenting the mixture together, with either bacteria alone, or in combination with yeast.

Consequently, there remains a need in the art for vegetable fermented products comprising coconut material, that are as white as possible, that have a consistency or structure typically for such fermented product and that contain only a low amount of added sugars and fats and particularly saturated fats. It is further desired that such products are obtained by simple processes at low cost.

### SUMMARY OF THE INVENTION

In an attempt to address one or more of the above discussed needs in the art, the inventors investigated the possibility of adding coconut cream or coconut milk to the fermented soy product. Coconut cream, or actually mostly denominated as coconut milk (as an ingredient), is standardized to comprise about 18% or about 24% coconut fat, or more in general between 15 and 25% coconut fat. The inventors have now provided a new yoghurt-like product, to be found in the plain category, which unexpectedly has a yoghurt-like, smooth and creamy texture, is ivory-white in colour, contains a low amount of (saturated) fats and to which only small amounts of sugar have to be added in order to obtain a reasonably short fermentation time and a good taste. Such product hence qualifies as a natural vegetable fermented product with coconut taste and flavour.

The present invention thus provides a vegetable fermented product, characterized in that said product comprises a fermented soy milk product and coconut milk or cream, the latter having a fat content of between 15 and 25%. The invention provides the following aspects:
Aspect 1: The invention provides a vegetable fermented product comprising:
   - a total protein content of between 3.5 and 4.5 % w/w;
   - a total fat content of between 2 and 4 % w/w; and
   - a total carbohydrate content of between 2 and 4 % w/w,
   wherein said product is produced by a method comprising the steps of:
   a) fermenting a soy milk with lactic acid bacteria,
   b) providing a coconut cream, and
   c) mixing the coconut cream with the fermented soy milk obtained in step a) in a ratio of about 93 to 98 % w/w of fermented soy milk to about 2 to 7 % w/w of coconut cream having a fat content of between 15 and 25%,wherein after mixing step c) no further fermentation step is applied to the product.

   Preferably, said vegetable fermented product comprises about 95 to 98 % w/w of fermented soy milk, and about 3 to 5% w/w coconut cream.
   Preferably, said vegetable fermented product comprises a coconut cream having a fat content of about 18% or of about 24%.
   Preferably, said vegetable fermented product comprises between 7 and 9 % w/w hulled soybeans, more preferably about 8 % w/w hulled soybeans.
   Preferably, said fermented soy milk is prepared as follows: to 8000 ml soy milk, having a fat content of between about 180 and 190 g, a protein content of between about 310 and 330 g, a total sugar content of between about 62 and 66 g and a pH of between 7.1 and 7.3, sucrose was added bringing the total carbohydrate content to between about 290 and 310 g, as well as citric acid to lower the pH to about 6,5 and minor amounts (approximately 4.5 to 5.5 g) of sea salt were added. Preferably, said soy milk is fermented with lactic acid bacteria (e.g. *Streptococcus thermophilus* and/or *Lactobacillus bulgaricus*) up to a pH of below 4.7, preferably of about 4.5.

Aspect 2. The invention provides the product according to aspect 1, having an ivory or ivory-white colour, with the following Lab colour values:
   - L: between 80 and 83,
   - a: between -1 and 2,
   - b: between 8 and 13.
Aspect 3. The invention provides the product according to anyone of aspects 1 to 2, being a yoghurt-like product having a total fat content of between 2.5 and 3.5 % w/w, preferably comprising between 1.0 and 1.2 % w/w saturated fats, between 0.4 and 0.6 % w/w mono-unsaturated fats, and between 1.4 and 1.6 % w/w unsaturated fats.
Aspect 4. The invention provides the product according to anyone of aspects 1 to 3, being a yoghurt-like product having a total carbohydrate content of between 2.5 and 3.5 % w/w, preferably comprising between 1.9 and 2.1 % w/w mono- and disaccharides, and between 0.7 and 0.9 % w/w fibers.
Aspect 5. The invention provides the product according to ayone of aspects 1 to 4, having a sucrose content of between 0.5 and 3% w/w, preferably between 0.5 and 2.5% w/w.
Aspect 6. The invention provides the product according to anyone of aspects 1 to 5, being a yoghurt-like product having a viscosity expressed as a Bostwick value of between 30 and 75.
Aspect 7. A vegetable fermented product comprising:
   - a total protein content of between 2 and 3,5 % w/w;
   - a total fat content of between 1 and 3 % w/w; and
   - a total carbohydrate content of between 1 and 3 % w/w,
   wherein said product is produced by a method comprising the steps of:
   a) fermenting a soy milk with lactic acid bacteria,
   b) providing a coconut cream, and
   c) mixing the coconut cream with the fermented soy milk obtained in step a) in a ratio of about 93 to 98 % w/w of fermented soy milk to about 2 to 7 % w/w of coconut cream having a fat content of between 15 and 25%, wherein after mixing step c) no further fermentation step is applied to the product.
Aspect 8. The invention provides the product according to anyone of aspects 1 to 7, additionally comprising one or more ingredients selected from the group comprising: calcium sources (e.g. tricalcium phosphate), stabilizers (e.g. pectin), antioxidants (tocopherol-rich extract, and/or ascorbyl palmitate), acidity regulators (e.g. sodium citrate and/or citric acid), sweeteners, flavourings, vitamins (e.g. B12, D2, and/or E), health-related supplements, and salts (e.g. sea-salt).
Aspect 9. The invention provides the product according to anyone of aspects 1 to 8, comprising calcium at a concentration of about 120 ppm.
Aspect 10. The invention provides a method for producing a vegetable fermented product comprising the steps of:
   a) fermenting a soy milk with lactic acid bacteria,
   b) providing a coconut cream, and
   c) mixing the coconut cream with the fermented soy milk obtained in step a) in a ratio of about 93 to 98 % w/w of fermented soy milk to about 2 to 7 % w/w of coconut cream having a fat content of between 15 and 25%, wherein after mixing step c) no further fermentation step is applied to the product.in order to fully preserve the flavor and smell of coconut in the final product.

   Preferably, said vegetable fermented product comprises between 7 and 9 % w/w hulled soybeans, more preferably about 8 % w/w hulled soybeans.
   Preferably, said fermented soy milk is prepared as follows: to 8000 ml soy milk, having a fat content of between about 180 and 190 g, a protein content of between about 310 and 330 g, a total sugar content of between about 62 and 66 g and a pH of between 7.1 and 7.3, sucrose was added bringing the total carbohydrate content to between about 290 and 310 g, as well as citric acid to lower the pH to about 6,5 and minor amounts (approximately 4.5 to 5.5 g) of sea salt were added. Preferably, said soy milk is fermented with lactic acid bacteria (e.g. *Streptococcus thermophilus* and/or *Lactobacillus bulgaricus*) up to a pH of below 4.7, preferably of about 4.5.
Aspect 11. The method according to aspect 10,
   for producing a composition comprising:
   - a total protein content of between 3.5 and 4.5 % w/w;
   - a total fat content of between 2 and 4 % w/w; and
   - a total carbohydrate content of between 2 and 4 % w/w; or
   for producing a composition comprising:
   - a total protein content of between 2 and 3,5 % w/w;
   - a total fat content of between 1 and 3 % w/w; and
   - a total carbohydrate content of between 1 and 3 % w/w.
Aspect 12. The invention provides the method according to aspect 10 or 11, wherein step b) comprises the steps of:
   b1) grating the coconut meat from the coconut, and
   b2) grinding the coconut meat and mixing with water such as to form a coconut cream, preferably having a volume weighed average particle diameter [D4,3] of below 10 µm.
Aspect 13. The invention provides the method according to anyone of aspects 10 to 12, wherein in step c) additionally one or more ingredients selected from the group comprising: stabilizers, antioxidants, acidity regulators, sweeteners, flavourings, health-related supplements, and salts, are mixed with the fermented soy milk.

### DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The term also encompasses "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

When a numerical value is used to indicate temperature, said value encompasses the exact numerical value as such, as well as all numerical values that would be rounded up to said exact numerical value according to standard mathematical and/or statistical regulations. For example, a temperature of "90°C", encompasses the values of 89.5; 89.6; 89.7; 89.8; 89.9; 90.0; 90.1; 90.2; 90.3; and 90.4°C. When this is used in combination with the term "about", said temperature encompasses also temperatures that differ from said exact temperature by 0.1, 0.2, 0.3, 0.4, 0.5, 0.6, 0.7, 0.7, 0.9, or 1.0 °C, both in the positive or negative range.

Similarly, when a period of time is indicated using a numerical value such as "about 1 hour" or "about 60 minutes", said value encompasses the exact time indicated as well as periods that deviate therefrom by e.g. less than one minute, half a minute, or 1, 2, 3, 4, 5, 6, 7, 8, 9, 10, 11, 12, 13, 14 or 15 minutes. Analogously, the term "about 1 hour" encompasses about 45, 50, 55 minutes to about 65, 70, and 75 minutes, as well as any time in between.

As used throughout the present disclosure, the terms "concentration" and "content" are used interchangeably and refer to the weight concentration or mass fraction of a constituent, i.e. the mass of a constituent divided by the total mass of all constituents, and is expressed in mg per kg or parts per million (ppm).

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

The products of the invention do not contain added lactose, and/or other animal- or dairy-derived products or components. Accordingly, they can be denoted as "vegetable products".

The term "vegetable" or "of vegetable origin" as used herein indicates that the product is animal-free. The term "animal-free" as used herein refers to a product to which no components of animal origin, such as dairy proteins, lactose, or other animal components were added. Unintended traces of components of animal origin may however be present. Preferably, the fermented product of the invention is a substantially vegetable product, i.e. a product wherein only vegetable components and/or synthetic components derived from vegetable sources, are present. Unintended traces of components of animal origin cannot be excluded and hence may be present.

A "fermented product" as used herein denotes a food product, a food ingredient or a functional food obtained through fermentation.

The term "food" or "food product" is used herein in a broad sense, and covers food for humans as well as food for animals (i.e. a feed). Preferably, the food is for human consumption. The food may be in the form of a solution or as a solid, depending on the use and/or the mode of application and/or the mode of administration.

The term "food ingredient" as used herein refers to a formulation which is or can be added in the preparation of other foodstuffs. The food ingredient may be in the form of a solution or as a solid, depending on the use and/or the mode of application and/or the mode of administration. With the term "fermented soy milk product" is meant herein a soy bean-derived food product or food ingredient, obtained through fermentation of soy milk. Non-limiting examples of fermented soy milk products include soy yoghurt or soy drink yoghurt.

The term "coconut cream" or "coconut milk" is a known term in the field and encompasses a milk or cream prepared from the meat or fruit flesh of the coconut, typically having a fat-content of between 15 and 25 % w/w. Coconut cream is commercially available and is classified or standardised according to said fat content. Coconut cream is imported sterilised from countries such as Indonesia or Sri Lanka. It is hence a sterile product and is not fermented in the current invention. The name coconut cream and coconut milk will be used interchangeably throughout the text.

The products of the invention are further characterized in that they have an ivory or ivory-white colour. Such colour is generally associated with natural foods and particularly with yoghurts or drink yoghurts or their plant-based alternatives of the plain segment of that fermented diary products' category. The products of the invention typically have the following Lab colour values: L between 80 and 83, a between -1 and 2, b between 13 and 8 upon production. This colour remains quite stable during the shelf-life of the product, but the b-component can drop to between 9 and 8 after 7 weeks of refrigerated shelf-life.

The products of the invention are further characterized in that they have a viscosity expressed as a Bostwick value (movement of the product in mm 20 sec after 'opening of the gate', measured at about 7 °C) of between 50 and 75 mm (measured 1 day after production (chilled storage)) and of between 30 and 55 mm (measured 3 weeks after production (chilled storage)).

Additional ingredients may be included in the products of the invention.

Stabilizer may optionally be included in the products of the invention. The term "stabilizer" as used herein refers to a food ingredient that inhibits the reaction between two or more other ingredients and/or the separation of ingredients. Non-limiting examples of stabilizers include pectins, alginates, carrageenans, locust bean gum and xanthan gum. Preferably, pectin is added as stabilizer to yoghurt-like products as described herein.

Another optional ingredient that may be included in the products of the invention is antioxidant. With the term "antioxidant" is meant herein a food ingredient that inhibits the oxidation of the other ingredients. Non-limiting examples of antioxidants are ascorbyl esters (such as, e.g., ascorbyl palmitate), tocopherol-rich extracts, and/or EDTAs.

Yet another optional ingredient suitable for use in the products of the invention is an acidity regulator or buffering agent. The terms "acidity regulator" and "buffering agent" are used as synonyms herein and refer to a food ingredient that minimizes changes of pH of the food. Non-limiting examples of acidity regulators are phosphates, sodium citrate and citric acid.

Sweeteners and/or other flavourings may also be optionally included in the products of the invention. The term "flavouring" as used herein generally refers to any substance that may be safely used in food, the function of which is to impart flavour. Non-limiting examples of sweeteners and/or flavourings are sugar, including sucrose, glucose, fructose, maltose, inverted sugar, or any other sweet monosaccharide or disaccharide, or sweet polyhydric alcohol, sugar cane juice, stevia extract, and/or some other suitable sweetener and/or flavouring.

Another optional ingredient that may be included in the products of the invention is a health-related supplement, i.e. a food additive that is intended to confer a health benefit to the consumer. Non-limiting examples of health-related supplements include calcium carbonate (CaCO₃), vitamins such as vitamin A, vitamin B2, vitamin B12, vitamin D, and vitamin E, zinc, fibers, proteins, potassium, phosphorus, fatty acids (e.g. omega 3, omega 6), oligosaccharides, and/or any other suitable health-related supplement. Preferably, said health-related supplement may be selected based at least in part on a neutral-taste quality that may have little or no impact on the overall taste of the final product.

Another optional ingredient that may be included in the products of the invention is a calcium source. Non-limiting examples of suitable calcium sources are tri-calcium citrate and tri-calcium phosphate.

Also optionally, a salt agent may be included in the products of the invention. Said salt agent may have a flavouring, stabilizing and/or buffering effect. Non-limiting examples of suitable salt agents include: sea salt (e.g. sodium chloride), a potassium phosphate (e.g. monopotassium phosphate (KH₂PO₄), dipotassium phosphate (K₂HPO₄), tripotassium phosphate (K₃PO₄)), and a sodium phosphate (e.g. disodium phosphate (Na₂HPO₄)).

### Coconut-based yoghurt-like product

In preferred embodiments, the fermented product is a yoghurt-like product comprising:
- a total protein content of between 3.5 and 4.5 % w/w;
- a total fat content of between 2 and 4 % w/w; and
- a total carbohydrate content of between 2 and 4 % w/w,
wherein said product is produced by a method comprising the steps of:
a) fermenting a soy milk with lactic acid bacteria,
b) providing a coconut cream, and
c) mixing the coconut cream with the fermented soy milk obtained in step a) in a ratio of about 93 to 98 % w/w of fermented soy milk to about 2 to 7 % w/w of coconut cream having a fat content of between 15 and 25%,wherein after mixing step c) no further fermentation step is applied to the product.

Preferably, said vegetable fermented product comprises between 7 and 9 % w/w hulled soybeans, more preferably about 8 % w/w hulled soybeans.

In particularly preferred embodiments, the fermented product is a yoghurt-like product comprising about 95.7% w/w of fermented soy milk product and about 4.3% w/w of coconut milk or cream. Coconut milk or cream is the liquid that comes from the grated meat of a brown coconut. It should not be confused with coconut water. The colour and rich taste of coconut milk can be attributed to the high oil content. Typically, coconut milk is obtained through the grating of coconut meat, mixing the resulting substance with a small amount of water to dissolve the fat present in the grated meat. The fat content of the coconut milk or cream used herein is typically between 15 and 25 % w/w, for example of about 18% w/w or about 24% w/w fat.

After fermentation of the soy milk, the coconut milk or cream is added as disclosed herein. Said mixture is not subjected to a further fermenting step in order to fully preserve the taste and flavour intensity of the coconut cream or milk in the final product.

### Process for producing a vegetable fermented coconut product

Another aspect of the invention relates to a method for producing a vegetable fermented product comprising the steps of:
a) fermenting a soy milk with lactic acid bacteria,
b) providing a coconut cream, and
c) mixing the coconut cream with the fermented soy milk, wherein after step c), the mixture is not subjected to a further fermentation step.

The steps of this method will be further clarified in the following passages.

As used herein, the term "soy milk" refers to a beverage made from soybeans. It is usually an aqueous dispersion comprising soybean protein and oil.

Soy milk prepared by any known method may be used in the methods of the invention. A method for preparing soy milk generally entails hydrating whole or defatted soybeans by e.g. soaking in water, heating, grinding to obtain slurry, and removing the okara (soy pulp fiber) from the soy milk by a method such as filtration. For example, a soy milk preparation known by the name of "tonyu" may be used for producing the fermented product of the invention. Tonyu is obtained from whole soybeans and is the subject of an AFNOR standard (NF V 29-001). Briefly, to obtain tonyu, soybeans are shelled and then mixed with water and ground hot. The ground product is separated after settling out so as to separate the solid residue, called "okara", from the soy milk, which constitutes the tonyu.

### Formulation of the soy milk

Optionally, the method may further comprise a step of formulating the soy milk prior to fermentation.

For example, a carbon source may be added to the soy milk. As used herein, the term "carbon source" is used in reference to any compound which may be utilized by the bacterium as a source of carbon for bacterial growth and/or metabolism. Said carbon source may be utilized by the bacteria, thereby promoting (e.g. accelerating) the fermentation process. Non-limiting examples include carbohydrates, e.g. monosaccharides such as glucose or fructose, sucrose, disaccharides, oligosaccharides, acids, alcohols, aldehydes, ketones, amino acids and peptides. Preferably, a carbohydrate is added, more preferably sugar and/or fructose. The addition of a carbon source is especially desirable when the amount of carbohydrates naturally present in the soy milk is too small. The amount of added carbohydrate is depending on the type. When sugar (sucrose) is used, an amount of e.g. 2 to 3 % w/w is typically added.

Minor amounts of edible organic acids, e.g. citric acid, lactic acid, or their salts, e.g. sodium citrate, may be added to the soy milk to decrease the pH. The final pH should preferably range between 6 and 7, more preferably about pH 6.5.

### Step a) Fermenting soy milk

The step of fermenting the soy milk may comprise inoculating a bacterial culture into the soy milk and fermenting the same.

Any conventional process for the fermentation of soy milk may be applied in the methods of the invention, such as, for example the soy milk fermentation process as disclosed in EP-A2-0521331.

Soy milk is fermented with lactic acid bacteria. The lactic acid bacterium may be any lactic acid producing strain, preferably a lactic acid producing strain belonging to a genus selected from the group comprising *Lactobacillus* sp., *Streptococcus* sp., *Lactococcus* sp., *Leuconostoc* sp., *Bifidobacterium* sp. and *Pediococcus* sp, such as a lactic acid producing strain belonging to a species selected from the group comprising *Lactobacillus acidophilus, Lactobacillus bulgaricus, Streptococcus lactis, Streptococcus cremoris, Streptococcus durans, Streptococcus thermophilus, Lactococcus lactis, Leuconostoc citrovorum, Bifidobacterium bifidum, Bifidobacterium longum, Bifidobacterium breve, Bifidobacterium infantis* and *Bifidobacterium animalis.* These lactic acid bacteria may be used alone or in combination. Preferably, the bacterial culture comprises a *Streptococcus thermophilus* strain.

The bacterial culture may be inoculated as living bacteria or in a frozen or freeze-dried state. When inoculating the bacterial culture as living bacteria, a bulk starter culture may be prepared, which may then directly be added to the soy milk.

The amount of inoculum may range between 10³ and 10⁹ CFU/ml, depending on the type of inoculum applied and the temperature and time of fermentation.

The fermentation temperature and the fermentation time may be appropriately decided depending on the type of the lactic acid bacterium to be used. Each bacterial culture has its optimum growth conditions and these conditions are usually aimed at. Usually, the fermentation is carried out at temperatures between 15°C and 45°C for between 3 and 24 hours. As a general rule, fermentation is allowed to proceed until the acidity of the fermentation mixture has reached a pH below 4.7, more preferably of about 4.5.

Fermentation may be carried out with any conventional device or fermentation tank or vessel used for conventional fermentation of e.g. cow milk.

### Step b) Providing a coconut cream

In preferred embodiments of the methods of the invention, step b) comprises: the grating and grinding of coconut meat and mixing with a small amount of water, put the mixture through a mesh or a strainer and collect the liquid going through the mesh or strainer to obtain a coconut milk of cream.

The term "grinding" as used herein denotes the process of crushing coconut meat to particles with a suitably small particle size.

Preferably, grinding is performed by several cutting and/or milling steps. The size of the coconut meat, may be roughly reduced in a first step, e.g., by cutting (e.g. in a Stephan cutter) or by milling (e.g. in a ball mill or bead mill), resulting in a first paste with only part of the oil liberated. In a second grinding step the particle size may be further reduced such that nearly all cells are broken, thereby liberating the content, which is mainly composed of coconut oil. This can be performed by milling (e.g. in a ball mill). The resulting average particle size (D[4,3]) will be typically below 10 µm.

Grinding of the coconut meat may be achieved using available apparatus and known techniques such as a cutter, a cutting mill, a ball mill, a colloid mill, a blade mill or the like or any combination thereof.

### Step c): Mixing

In a further step of the methods as taught herein, the coconut cream is mixed with the fermented soy milk product.

Optionally, one or more additional ingredients selected from the group comprising: stabilizers, antioxidants, acidity regulators, sweeteners, flavourings, health-related supplements, and salts may be mixed with the fermented soy milk product.

These additional ingredients may be mixed with the coconut cream prior to, simultaneous with, or after addition to the fermented soy milk product or they can be mixed with the fermented soy milk product prior to addition of the coconut cream, In both cases, the mixture is not subjected to a further fermentation step.

Mixing may be performed e.g. using a high shear mixer, a lab mixer, a liquiverter, a rotor-stator type mixer, a blender, or the like.

For example, in a method for producing a vegetable yoghurt-like product in accordance with the present invention, about 4.3% w/w of coconut cream is mixed with about 95.7% of the fermented soy milk product.

### Step d): Heat treatment

The fermented product may then optionally be pasteurized or sterilized for the time necessary for obtaining the desired pasteurizing or sterilizing value, resulting in a product having a longer shelf life. Accordingly, in a next step of the methods as taught herein, the product may be subjected to a heat treatment.

Preferably, the product is subjected to an ultra-high temperature - short time (UHT-ST) or ultra-high temperature (UHT) heat treatment, shortly termed UHT treatment or UHT. The terms "UHT-ST treatment", "UHT treatment" and "ultra-high temperature processing" are synonyms and denote the sterilization of food by heating it for an extremely short period, preferably between 1 and 10 seconds, at a temperature exceeding 135 °C, such as e.g. at a temperature of between 140 °C and 150 °C, which is the temperature required to kill any residing bacteria or spores.

### Step e): Packaging

The final product may finally be packed in any type of recipient, bottle or package. Non-limiting examples are e.g. the Tetrapak® cardboard packages, plastic, PET, or glass tons, cans or bottles, for distribution and sale to consumers.

The present invention will be described in greater detail below with the aid of the examples which follow. It goes without saying, however, that these examples are given by way of illustration of the invention and does not constitute in any manner a limitation thereof.

### EXAMPLES

### Example 1: Preparation of a yoghurt-like product on the basis of soy and coconut

A yoghurt-like product based on coconuts according to the invention was prepared as follows:
Soy milk (Provamel, Alpro-Wevelgem, Belgium) was supplemented with sucrose, citric acid and sea salt (formulated soy milk). To 8000 ml soy milk, having a fat content of 184 g, a protein content of 320 g, a total sugar content of 64 g and a pH of 7.2, sucrose was added, bringing the total carbohydrate content to 300 g, as well as citric acid to lower the pH to about 6.5 and minor amounts (approximately 5 g) of sea salt.

The formulated soy milk was subjected to fermentation at 43°C until pH = 4.5 was reached using a conventional yoghurt culture comprising *Streptococcus thermophilus* and *Lactobacillus bulgaricus.*

After fermentation, the fermented soy milk product (white mass) was cooled to 10°C and mixed with a coconut cream in a ratio 95.7 % w/w white mass/4.3 % w/w coconut cream with a 18% fat content. Some additional components were added to the mixture such as tri-calcium citrate, pectin, sodium citrate, citric acid, flavouring, antioxidants (tocopherol-rich extract, ascorbyl palmitate), and vitamins (B12, D2, E).

The end-product of this example comprises: water, hulled soy beans (7,8% w/w), coconut-milk (4,3% w/w), sugar (2.2% w/w), tri-calciumcitrate, stabiliser (e.g. pectin), acidity regulators (e.g. sodium citrate, citric acid), flavouring, sea salt, antioxidants (e.g. tocopherol-rich extract, ascorbyl palmitate), yogurt cultures (e.g. Streptococcus thermophilus, Lactobacillus bulgaricus), and vitamins (B12, D2, E).

The typical composition of the coconut yoghurt-like product of the invention comprises an energy value of 55 kcal/100g, a protein content of 3.91g/100g, a total carbohydrate content of 2.81g/100g of which mono and disaccharides 2.06 g/100g and soluble and insoluble fibers 0.81 g/100g, and a total fat content of 2.99 g/100g of which saturated fats comprise 1.12 g/100g, mono-unsaturated fats comprise 0.49 g/100g and poly-unsaturated fats comprise 1.37 g/100g.

### Example 2: Sensorial appreciation of the product from example 1

The following parameters or sensorial characteristics were tested for the product obtained from example 1:

| **Relevant descriptors** | **Extreme scores** | | |
|---|---|---|---|
| | *1* | *5* | 9 |
| ***Colour*** | *white* | | *yellow* |
| ***Coconut flavour intensity*** | *no coconut flavour* | | *extreme coconut flavour* |
| ***Coconut taste intensity*** | *no coconut taste* | | *extreme coconut taste* |
| ***Soy taste*** | *no soy*/*beany taste* | | *extreme soy, beany taste* |
| ***Oxidation*** | *no cardboard flavour*/*taste* | | *extreme cardboard flavour* |
| ***Acidity*** | *not sour* | *mild sour* | *very sour* |
| ***Sweetness*** | *not sweet* | | *very sweet* |
| ***Structure in cup*** | *no lumps* | | *very lumpy* |
| ***Mouthfeel*** | *thin, watery* | | *thick viscous* |

**The results were as follows (tests done at different time points during shelf life)**

| **Descriptor** | Score (moment of release) | Description (moment of release; day 0) | Score (moment of consumption ; day 1) | Description (moment of consumption) | Score (end of shelf-life) | Description (end of shelf life; day 46) |
|---|---|---|---|---|---|---|
| ***Colour*** | 3 | white, slightly yellow | 3 | white, slightly yellow | 3 | white, slightly yellow |
| ***Coconut flavour intensity*** | 7 | high flavour intensity | 7 | high flavour intensity | 5 | enough flavour intensity |
| ***Coconut taste intensity*** | 7 | high taste intensity | 7 | high taste intensity | 5 | enough taste intensity |
| ***Soy taste*** | 3 | few soy taste | 3 | few soy taste | 3 | few soy taste |
| ***Oxidation*** | 1 | no oxidation | 1 | no oxidation | 3 | a bit oxidation |
| ***Acidity*** | 5 | mild sour | 5 | mild sour | 5 | mild sour |
| ***Sweetness*** | 3 | a little sweet | 3 | a little sweet | 3 | a little sweet |
| ***Structure in cup*** | 3 | very few lumps | 3 | very few lumps | 5 | few lumps |
| ***Mouthfeel*** | 5 | smooth | 5 | smooth | 5 | smooth |

From the above sensory test, it is clear that a product is obtained having a high coconut taste and flavour intensity. Without wanting to be bound by any particular theory, said high coconut taste and flavour intensity is believed to be caused by avoiding fermentation of the coconut cream together with the soy milk, which reduces and changes the natural coconut taste.

The colour Lab values of the product according to the invention can be defined as follows: L value between 80 and 83, a value between -1 and 2, b value between 13 and 8 upon production. During shelf-life (e.g. 7 weeks after production, chilled storage) the b-component can vary from between 13 to 12 to between 9 to 8.

To conclude, the present invention provides for a yoghurt-like product on the basis of soy and coconut that is ivory-white in colour, has a good coconut taste and good stability during the shelf life of the product.

### Example 3: Viscosity measurements

The product of example 1 has a viscosity expressed as a Bostwick value (movement of the product in mm 20 sec after 'opening of the gate', measured at 7 °C) of between 50 and 75 when measured 1 day after production (chilled storage) and of between 30 and 55 when measured 3 weeks after production (chilled storage).

## Claims

1. A vegetable fermented product comprising:
- a total protein content of between 3.5 and 4.5 % w/w;
- a total fat content of between 2 and 4 % w/w; and
- a total carbohydrate content of between 2 and 4 % w/w,
wherein said product is produced by a method comprising the steps of:
a) fermenting a soy milk with lactic acid bacteria,
b) providing a coconut cream, and
c) mixing the coconut cream with the fermented soy milk obtained in step a) in a ratio of 93 to 98 % w/w of fermented soy milk to 2 to 7 % w/w of coconut cream having a fat content of between 15 and 25%,wherein after mixing step c) no further fermentation step is applied to the product.

2. The product according to claim 1, having an ivory or ivory-white colour, with the following Lab colour values:
- L: between 80 and 83,
- a: between -1 and 2,
- b: between 8 and 13.

3. The product according to claim 1 or 2, having a sucrose content of between 0.5 and 3% w/w, preferably between 0.5 and 2.5% w/w.

4. The product according to anyone of claims 1 to 3, having a viscosity expressed as a Bostwick value, which is the movement of the product in mm 20 sec after "opening of the gate", measured at 7°C, of between 50 and 75 mm, measured 1 day after production, and of between 30 and 55 mm, measured 3 weeks after production.

5. A vegetable fermented product comprising:
- a total protein content of between 2 and 3,5 % w/w;
- a total fat content of between 1 and 3 % w/w; and
- a total carbohydrate content of between 1 and 3 % w/w,
wherein said product is produced by a method comprising the steps of:
a) fermenting a soy milk with lactic acid bacteria,
b) providing a coconut cream, and
c) mixing the coconut cream with the fermented soy milk obtained in step a) in a ratio of 93 to 98 % w/w of fermented soy milk to 2 to 7 % w/w of coconut cream having a fat content of between 15 and 25%, wherein after mixing step c) no further fermentation step is applied to the product.

6. The product according to any one of claims 1 to 5, further comprising one or more ingredients selected from the group comprising: calcium sources stabilizers, antioxidants, acidity regulators, sweeteners, flavourings, vitamins, health-related supplements, and salts.

7. The product according to any one of claims 1 to 6, comprising calcium at a concentration of 120 ppm.

8. A method for producing a vegetable fermented product comprising the steps of:
a) fermenting a soy milk with lactic acid bacteria,
b) providing a coconut cream, and
c) mixing the coconut cream with the fermented soy milk obtained in step a) in a ratio of 93 to 98 % w/w of fermented soy milk to 2 to 7 % w/w of coconut cream having a fat content of between 15 and 25%, wherein after mixing step c) no further fermentation step is applied to the product.

9. The method according to claim 8,
for producing a composition comprising:
- a total protein content of between 3.5 and 4.5 % w/w;
- a total fat content of between 2 and 4 % w/w; and
- a total carbohydrate content of between 2 and 4 % w/w; or
for producing a composition comprising:
- a total protein content of between 2 and 3,5 % w/w;
- a total fat content of between 1 and 3 % w/w; and
- a total carbohydrate content of between 1 and 3 % w/w.

10. The method according to claim 8 or 9, wherein step b) comprises the steps of:
b1) grating the coconut meat from the coconut, and
b2) grinding the coconut meat and mixing with water such as to form a coconut cream, preferably having a volume weighed average particle diameter of below 10 µm.

11. The method according to anyone of claims 8 to 10, wherein in step c) additionally one or more ingredients selected from the group comprising: stabilizers, antioxidants, acidity regulators, sweeteners, flavourings, health-related supplements, and salts, are mixed with the fermented soy milk.

## Patentansprüche

1. Pflanzliches fermentiertes Produkt, umfassend:
- einen Gesamtproteingehalt zwischen 3,5 und 4,5 Gew.-%;
- einen Gesamtfettgehalt zwischen 2 und 4 Gew.-%; und
- einen Gesamtkohlenhydratgehalt zwischen 2 und 4 Gew.-%,
wobei das Produkt durch ein Verfahren hergestellt wird, das die folgenden Schritte umfasst:
a) Fermentieren einer Sojamilch mit Milchsäurebakterien,
b) Bereitstellen einer Kokosnusscreme, und
c) Mischen der Kokosnusscreme mit der in Schritt a) erhaltenen fermentierten Sojamilch in einem Verhältnis von 93 bis 98 Gew.-% fermentierter Sojamilch zu 2 bis 7 Gew.-% Kokosnusscreme mit einem Fettgehalt zwischen 15 und 25 %, wobei nach dem Mischschritt c) kein weiterer Fermentationsschritt auf das Produkt angewendet wird.

2. Produkt nach Anspruch 1 mit einer elfenbeinfarbenen oder elfenbeinfarbenen-weißen Farbe mit den folgenden Lab-Farbwerten:
- L: zwischen 80 und 83,
- a: zwischen -1 und 2,
- b: zwischen 8 und 13.

3. Produkt nach Anspruch 1 oder 2 mit einem Saccharosegehalt zwischen 0,5 und 3 Gew.-%, vorzugsweise zwischen 0,5 und 2,5 Gew.-%.

4. Produkt nach einem der Ansprüche 1 bis 3 mit einer Viskosität, ausgedrückt als Bostwick-Wert, bei dem es sich um die Bewegung des Produkts in mm 20 s nach dem "Öffnen des Tores" handelt, gemessen bei 7 °C, zwischen 50 und 75 mm, gemessen 1 Tag nach der Herstellung und zwischen 30 und 55 mm, gemessen 3 Wochen nach der Herstellung.

5. Pflanzliches fermentiertes Produkt, umfassend:
- einen Gesamtproteingehalt zwischen 2 und 3,5 Gew.-%;
- einen Gesamtfettgehalt zwischen 1 und 3 Gew.-%; und
- einen Gesamtkohlenhydratgehalt zwischen 1 und 3 Gew.-%,
wobei das Produkt durch ein Verfahren hergestellt wird, das die folgenden Schritte umfasst:
a) Fermentieren einer Sojamilch mit Milchsäurebakterien,
b) Bereitstellen einer Kokosnusscreme, und
c) Mischen der Kokosnusscreme mit der in Schritt a) erhaltenen fermentierten Sojamilch in einem Verhältnis von 93 bis 98 Gew.-% fermentierter Sojamilch zu 2 bis 7 Gew.-% Kokosnusscreme mit einem Fettgehalt zwischen 15 und 25 %, wobei nach dem Mischschritt c) kein weiterer Fermentationsschritt auf das Produkt angewendet wird.

6. Produkt nach einem der Ansprüche 1 bis 5, ferner umfassend einen oder mehrere Bestandteile, ausgewählt aus der Gruppe, umfassend:
Calciumquellen-Stabilisatoren,
Antioxidationsmittel, Säureregulatoren, Süßungsmittel, Aromastoffe, Vitamine, gesundheitsbezogene Ergänzungsmittel und Salze.

7. Produkt nach einem der Ansprüche 1 bis 6, umfassend Calcium in einer Konzentration von 120 ppm.

8. Verfahren zum Herstellen eines pflanzlichen fermentierten Produkts, umfassend die folgenden Schritte:
a) Fermentieren einer Sojamilch mit Milchsäurebakterien,
b) Bereitstellen einer Kokosnusscreme, und
c) Mischen der Kokosnusscreme mit der in Schritt a) erhaltenen fermentierten Sojamilch in einem Verhältnis von 93 bis 98 Gew.-% fermentierter Sojamilch zu 2 bis 7 Gew.-% Kokosnusscreme mit einem Fettgehalt zwischen 15 und 25 %, wobei nach dem Mischschritt c) kein weiterer Fermentationsschritt auf das Produkt angewendet wird.

9. Verfahren nach Anspruch 8 zum Herstellen einer Zusammensetzung, umfassend:
- einen Gesamtproteingehalt zwischen 3,5 und 4,5 Gew.-%;
- einen Gesamtfettgehalt zwischen 2 und 4 Gew.-%; und
- einen Gesamtkohlenhydratgehalt zwischen 2 und 4 Gew.-%; oder
zum Herstellen einer Zusammensetzung, umfassend:
- einen Gesamtproteingehalt zwischen 2 und 3,5 Gew.-%;
- einen Gesamtfettgehalt zwischen 1 und 3 Gew.-%; und
- einen Gesamtkohlenhydratgehalt zwischen 1 und 3 Gew.-%.

10. Verfahren nach Anspruch 8 oder 9, wobei der Schritt b) die folgenden Schritte umfasst:
b1) Reiben des Kokosnussfleisches aus der Kokosnuss, und
b2) Mahlen des Kokosnussfleisches und Mischen mit Wasser, um eine Kokosnusscreme zu bilden, die vorzugsweise einen volumengewichteten durchschnittlichen Partikeldurchmesser von unter 10 µm aufweist.

11. Verfahren nach einem der Ansprüche 8 bis 10, wobei in Schritt c) zusätzlich ein oder mehrere Bestandteile, ausgewählt aus der Gruppe bestehend aus: Stabilisatoren, Antioxidationsmitteln, Säureregulatoren, Süßstoffen, Aromastoffen, gesundheitsbezogenen Ergänzungsmitteln und Salzen, mit der fermentierten Sojamilch gemischt werden.

## Revendications

1. Produit végétal fermenté comprenant :
- une teneur en protéines totales comprise entre 3,5 et 4,5 % p/p ;
- une teneur en matières grasses totales comprise entre 2 et 4 % p/p ; et
- une teneur en glucides totaux comprise entre 2 et 4 % p/p,
ledit produit étant produit par un procédé comprenant les étapes consistant à :
a) fermenter un lait de soja avec des bactéries lactiques,
b) fournir une crème de noix de coco et
c) mélanger la crème de noix de coco avec le lait de soja fermenté obtenu dans l'étape a) en un rapport de 93 à 98 % p/p de lait de soja fermenté pour 2 à 7 % p/p de crème de noix de coco ayant une teneur en matières grasses comprise entre 15 et 25 %, dans lequel après l'étape de mélange c) aucune autre étape de fermentation n'est appliquée au produit.

2. Produit selon la revendication 1, ayant une couleur ivoire ou blanc ivoire, présentant les valeurs de couleur Lab suivantes :
- L : entre 80 et 83,
- a : entre -1 et 2,
- b : entre 8 et 13.

3. Produit selon la revendication 1 ou 2, ayant une teneur en sucrose comprise entre 0,5 et 3 % p/p, de préférence entre 0,5 et 2,5 % p/p.

4. Produit selon l'une quelconque des revendications 1 à 3, ayant une viscosité exprimée sous forme d'une valeur selon Bostwick, qui est l'avancement du produit en mm 20 s après « l'ouverture de la porte », mesurée à 7 °C, comprise entre 50 et 75 mm, lorsqu'elle est mesurée 1 jour après la production, et comprise entre 30 et 55 mm, lorsqu'elle est mesurée 3 semaines après la production.

5. Produit végétal fermenté comprenant :
- une teneur en protéines totales comprise entre 2 et 3,5 % p/p ;
- une teneur en matières grasses totales comprise entre 1 et 3 % p/p ; et
- une teneur en glucides totaux comprise entre 1 et 3 % p/p,
ledit produit étant produit par un procédé comprenant les étapes consistant à :
a) fermenter un lait de soja avec des bactéries lactiques,
b) fournir une crème de noix de coco et
c) mélanger la crème de noix de coco avec le lait de soja fermenté obtenu dans l'étape a) en un rapport de 93 à 98 % p/p de lait de soja fermenté pour 2 à 7 % p/p de crème de noix de coco ayant une teneur en matières grasses comprise entre 15 et 25 %, dans lequel après l'étape de mélange c) aucune autre étape de fermentation n'est appliquée au produit.

6. Produit selon l'une quelconque des revendications 1 à 5, comprenant en outre un ou plusieurs ingrédients choisis dans le groupe comprenant : des sources de calcium, des stabilisants, des antioxydants, des correcteurs d'acidité, des édulcorants, des arômes, des vitamines, des compléments liés à la santé et des sels.

7. Produit selon l'une quelconque des revendications 1 à 6, comprenant du calcium en une concentration de 120 ppm.

8. Procédé pour la production d'un produit végétal fermenté comprenant les étapes consistant à :
a) fermenter un lait de soja avec des bactéries lactiques,
b) fournir une crème de noix de coco et
c) mélanger la crème de noix de coco avec le lait de soja fermenté obtenu dans l'étape a) en un rapport de 93 à 98 % p/p de lait de soja fermenté pour 2 à 7 % p/p de crème de noix de coco ayant une teneur en matières grasses comprise entre 15 et 25 %,
dans lequel après l'étape de mélange c) aucune autre étape de fermentation n'est appliquée au produit.

9. Procédé selon la revendication 8,
pour la production d'une composition comprenant :
- une teneur en protéines totales comprise entre 3,5 et 4,5 % p/p ;
- une teneur en matières grasses totales comprise entre 2 et 4 % p/p ; et
- une teneur en glucides totaux comprise entre 2 et 4 % p/p ; ou
pour la production d'une composition comprenant :
- une teneur en protéines totales comprise entre 2 et 3,5 % p/p ;
- une teneur en matières grasses totales comprise entre 1 et 3 % p/p ; et
- une teneur en glucides totaux comprise entre 1 et 3 % p/p.

10. Procédé selon la revendication 8 ou 9, dans lequel l'étape b) comprend les étapes consistant à :
b1) râper la chair de noix de coco provenant de la noix de coco et
b2) broyer la chair de noix de coco et mélanger avec de l'eau de manière à former une crème de noix de coco, de préférence ayant un diamètre moyen des particules pondéré en fonction du volume au-dessous de 10 µm.

11. Procédé selon l'une quelconque des revendications 8 à 10, dans lequel dans l'étape c) de plus un ou plusieurs ingrédients choisis parmi le groupe comprenant : des stabilisants, des antioxydants, des correcteurs d'acidité, des édulcorants, des arômes, des compléments liés à la santé et des sels, sont mélangés avec le lait de soja fermenté.
